(19) Europäisches Patentamt
European Patent Office
Office européen des brevets

(11) **EP 1 380 454 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*B60G 17/052* *(2006.01)*          *B60G 17/015* *(2006.01)*

(21) Anmeldenummer: **03010651.2**

(22) Anmeldetag: **13.05.2003**

(54) **Verfahren zum Konstanthalten eines Fahrzeugniveaus**

Method for controlling vehicle body level

Méthode pour contrôler le niveau de chassis du vehicule

(84) Benannte Vertragsstaaten:
**DE FR IT SE**

(30) Priorität: **11.07.2002 DE 10231245**

(43) Veröffentlichungstag der Anmeldung:
**14.01.2004 Patentblatt 2004/03**

(73) Patentinhaber: **WABCO GmbH**
**30453 Hannover (DE)**

(72) Erfinder:
• **Lochte-Holtgreven, Albrecht**
**31832 Springe (DE)**
• **Lucas, Johann**
**31319 Sehnde/Höver (DE)**
• **Mast, Gerhard**
**30890 Barsinghausen (DE)**

(74) Vertreter: **Günther, Constantin et al**
**WABCO GmbH**
**Postfach 91 12 62**
**30432 Hannover (DE)**

(56) Entgegenhaltungen:
**EP-A- 0 666 190          WO-A-98/35845**
**DE-A- 19 539 887          US-A- 4 625 994**

• **ENGFER O: "ELEKTRONISCH GEREGELTE LUFTFEDERUNG FUER NUTZFAHRZEUGE" VDI BERICHTE, DUESSELDORF, DE, Bd. 687, 8. September 1988 (1988-09-08), Seiten 161-181, XP000613798 ISSN: 0083-5560**

**Beschreibung**

Die Erfindung betrifft ein Verfahren zum Konstanthalten eines Fahrzeugniveaus gemäß dem Oberbegriff des Patentanspruchs 1.

Ein gattungsgemäßes Verfahren ist aus der EP 0 666 190 A bekannt.

Bei mit Luftfederungsanlagen ausgestatteten Fahrzeugen tritt beim Be- bzw. Entladen z. B. an einer Laderampe der Effekt auf, daß der Fahrzeugaufbau eine ursprünglich eingestellte Niveaulage verändert, z. B. wenn ein Gabelstapler auf die Ladefläche des Fahrzeuges fährt. Diese Änderung der Niveaulage kann von einer in dem Fahrzeug vorgesehenen Niveauregeleinrichtung kompensiert werden. Bei häufigem Lastwechsel an der Ladefläche, z. B. durch einen auf die Ladefläche hinauf und wieder herunter fahrenden Gabelstapler, führt eine solche Nachregelung der Niveaulage dazu, daß die Niveauregeleinrichtung häufig Druckluft in die Luftfederbälge der Luftfederungsanlage hinzuführen und wieder abführen muß. Dies führt zu einem relativ hohen Druckluft- und Energieverbrauch, was unerwünscht ist. Insbesondere bei stehendem Fahrzeug oder bei einem einzelnen Anhängefahrzeug ohne eigene Drucklufterzeugung ist ein derartiges Nachregeln nur durch Entnahme von Druckluft aus einem Druckluftvorratsbehälter möglich. Da ein solcher Druckluftvorratsbehälter eine begrenzte Vorratskapazität hat, kann es vorkommen, daß die Niveauregelung nicht bis zum Ende der Be- bzw. Entladungsvorgänge regelbereit bleibt.

Das, aus der DE 198 06 499 A, bekannte Verfahren geht von einer Luftfederungsanlage aus, bei der zur Niveauverstellung spezielle Luftfederbälge vorgesehen sind, in denen jeweils eine Abstützeinrichtung integriert ist. Mittels der Abstützeinrichtungen ist es möglich, die Niveaulage eines Fahrzeugs, in dem derartige Luftfederbälge installiert ist, bei Beladungsänderungen, etwa an einer Laderampe, konstant zu halten. Hierfür wird bei dem bekannten Verfahren zunächst ein Soll-Fahrzeugniveau eingestellt, sodann die Abstützeinrichtungen ausgefahren und schließlich der Luftfederbalg vollständig entlüftet. Der Fahrzeugaufbau wird dann von den Abstützeinrichtungen getragen.

Das bekannte Verfahren hat den Nachteil, daß ein relativ aufwendiger und teurer Luftfederbalg mit einer Abstützeinrichtung an jedem abzustützenden Rad des Fahrzeuges erforderlich ist. Für die Ansteuerung der Abstützeinrichtung ist weiterer apparativer Aufwand wie z.B. Ventile und elektrische Betätigungsmittel für die Ventile erforderlich. Ein weiterer Nachteil ist, daß die gesamte Druckluft im Luftfederbalg beim Arretieren des Fahrwerks verloren geht und nach Beendigung der Arretierung wieder aufgefüllt werden muß. Dies kostet Zeit und Energie.

Der Erfindung liegt daher die Aufgabe zugrunde, ein Verfahren zum Konstanthalten eines Fahrzeugniveaus, insbesondere beim Be- und Entladen des Fahrzeuges, anzugeben, das bei Verwendung handelsüblicher Luftfederungsanlagen ohne Arretiereinrichtung mit einfachen Mitteln ein Konstanthalten des Fahrzeugniveaus ermöglicht.

Diese Aufgabe wird durch die in dem Patentanspruch 1 angegebene Erfindung gelöst. Weiterbildungen und vorteilhafte Ausgestaltungen der Erfindung sind in den ünteransprüchen angegeben.

Bevorzugtes Anwendungsgebiet der Erfindung sind Nutzfahrzeuge, die an Laderampen be- und entladen werden.

Die Erfindung hat den Vorteil, in jeder handelsüblichen Luftfederungsanlage durch einfache Erweiterung von Steueralgorithmen in einem elektronischen Steuergerät eingesetzt werden zu können. Eine mechanische Blockiereinrichtung für das Fahrwerk oder eine Abstützeinrichtung wie in dem eingangs genannten Stand der Technik ist nicht erforderlich. Ein weiterer Vorteil besteht darin, daß der Luftverbrauch gegenüber bekannten Verfahren deutlich gesenkt und insbesondere auf das minimal erforderliche Maß reduziert werden kann. Hierdurch ist das erfindungsgemäße Verfahren besonders vorteilhaft bei Fahrzeugen einsetzbar, bei denen keine eigene Drucklufterzeugung vorhanden ist oder die Drucklufterzeugung abgeschaltet ist, z. B. bei Anhängefahrzeugen oder bei im Stillstand befindlichen Fahrzeugen mit abgeschaltetem Motor.

In einer vorteilhaften Weiterbildung der Erfindung ist ein Lademodus vorgesehen, in dem die in Anspruch 1 oder 2 angegebenen Verfahrensschritte ausführbar sind. Durch die Festlegung, daß die in Anspruch 1 oder 2 angegebenen Verfahrensschritte nur im Lademodus ausführbar sind, ist auf einfache Weise eine klare Trennung zwischen dem "normalen" Betriebsmodus der Luftfederungsanlage, in welchem eine Niveauregelung bekannter Art ausgeführt wird, und dem Lademodus möglich.

In einer vorteilhaften Weiterbildung der Erfindung ist an dem Fahrwerk des Fahrzeuges zusätzlich ein Dämpfungsmittel zur Dämpfung von Niveauänderungen vorgesehen, das hinsichtlich seines Dämpfungsverhaltens kontinuierlich oder in Stufen im Bereich von "schwache Dämpfung" bis "starke Dämpfung" verstellbar ist. Als derartige Dämpfungsmittel können z. B. Stoßdämpfer verwendet werden, wie sie aus der US 4,733,883 bekannt sind. Gemäß der vorteilhaften Ausgestaltung der Erfindung wird im Lademodus das Dämpfungsmittel auf "starke Dämpfung" verstellt. Hierdurch kann die Reaktion des Fahrzeugaufbaus auf plötzliche starke Laständerungen, wie z. B. durch den genannten Gabelstapler verursacht, vermieden oder zumindest auf ein relativ geringes Maß verringert werden. Eventuell erforderliche Signalfilterungs-Maßnahmen, die zur Auswertung der Änderungen des Ist-Fahrzeugniveaus gemäß Patentanspruch 1 in dem elektronischen Steuergerät vorgenommen werden, um aus den Änderungen des Ist-Fahrzeugniveaus die jeweilige Beladungsänderungsrichtung zu ermitteln, können hierdurch vereinfacht werden, da durch die erhöhte mechanische Dämpfung durch das Dämpfungsmittel auch das erfaßte Signal des Ist-Fahrzeugniveaus gedämpft und somit geglättet wird.

Eine Nachführung des Fahrzeugniveaus auf eine gewünschte Niveaulage kann dann durch kurze Belüftungen (beim Beladen) bzw. Entlüftungen (beim Entladen) erfolgen. Wegen der zu erwartenden langsamen Reaktion des Fahrzeugaufbaus auf derartige geringe Luftmengenänderungen infolge der starken Dämpfung ist die Zeitdauer für die Belüftungen/Entlüftungen vorzugsweise derart festzulegen, daß die Belüftung/Entlüftung bereits vor Erreichen der gewünschten Niveaulage beendet wird. Diese Zeitdauer kann vorteilhaft z.B. in Abhängigkeit von der zugeführten bzw. abgeführten Ladung bestimmt werden. Sollte sich die Niveaulage des Fahrzeugaufbaus durch einen Entladevorgang oberhalb der gewünschte Niveaulage, z.B. der Laderampe, befinden, wird das Dämpfungsmittel wieder auf "schwache Dämpfung" verstellt, damit ein zügiges Nachregeln durch die Luftfederung durch Entlüften der Luftfederbälge erfolgen kann.

Unter Nennung weiterer Vorteile wird die Erfindung nachfolgend anhand eines Ausführungsbeispiels unter Verwendung von Zeichnungen näher erläutert.

Es zeigen

Fig. 1    eine schematische Darstellung einer Luftfederungsanlage, in welcher die Erfindung angewendet werden kann, und

Fig. 2    ein Ausführungsbeispiel für das erfindungsgemäße Verfahren in Flußdiagrammdarstellung.

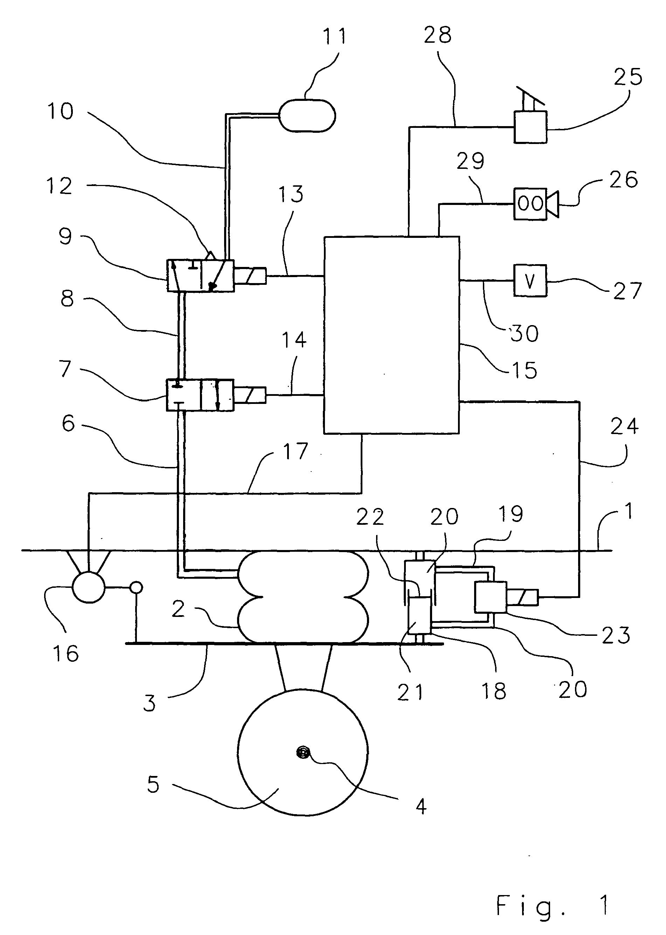

In der Fig. 1 symbolisieren doppelt gezogene Linien druckmittelführende Leitungen und einfache Linien elektrische Signalleitungen.

In der Fig. 1 ist in schematischer Darstellung ein Fahrzeugaufbau (1) dargestellt, der sich über einen Luftfederbalg (2) auf einem Achsträger (3) abstützt. An dem Achsträger (3) sind eine Fahrzeugachse (4) mit einem Rad (5) mechanisch starr angeordnet. Zur Vereinfachung der Darstellung sind im Ausführungsbeispiel nur ein Luftfederbalg und ein Rad dargestellt. Das Fahrzeug weist in der Praxis weitere Luftfederbälge, Räder etc. auf.

Der Luftfederbalg (2) ist über eine Druckluftleitung (6), ein elektrisch steuerbares 2/2-Wegeventil (7), eine weitere Druckluftleitung (8), ein elektrisch steuerbares 3/2-Wegeventil (9) sowie eine weitere Druckluftleitung (10) mit einem Druckluftvorratsbehälter (11) zur Druckluftzufuhr verbindbar. Der Druckluftvorratsbehälter (11) ist über eine in der Fig. 1 nicht dargestellte Einrichtung zur Drucklufterzeugung, die beispielsweise einen Kompressor enthält, mit Druckluft befüllbar.

Das Ventil (7) dient als Absperrventil zum Halten einer in dem Luftfederbalg (2) enthaltenen Luftmenge. Das Ventil (9) dient bei in die Durchlaßstellung geschalteten Ventil (7) als kombiniertes Einlaß-/Auslaßventil zum Befüllen des Luftfederbalgs (2) mit Druckluft aus dem Druckluftvorratsbehälter (11) oder zum Entlüften des Luftfederbalgs (2) in die Atmosphäre. Durch geeignete Steuerung der Ventile (7, 9) ist der Luftfederbalg (2) also wahlweise mit dem Druckluftvorratsbehälter (11) oder mit einem mit der Atmosphäre verbundenen Anschluß (12) des Ventils (9) verbindbar. Über das Ventil (7) kann diese Verbindung geöffnet oder abgesperrt werden. Die Ventile (7, 9) sind über elektrische Leitungen (13, 14) mit einem elektronischen Steuergerät (15) verbunden.

Des weiteren ist ein Niveausensor (16) zur Erfassung des Ist-Fahrzeugniveaus mit dem elektronischen Steuergerät (15) über eine elektrische Leitung (17) verbunden. Der Niveausensor (16) erfaßt den Abstand zwischen dem Fahrzeugaufbau (1) und dem Achsträger (3) bzw. die Änderungen dieses Abstands.

Die Teile (2, 6, 7, 8, 9, 10, 11) gelten im vorliegenden Ausführungsbeispiel als zu dem Niveauverstellmittel mit den Verstellrichtungen "Heben" und "Senken" zugehörig. Die Teile (13, 14, 15, 16, 17) gelten im vorliegenden Ausführungsbeispiel als zu der Niveauregeleinrichtung zugehörig, die durch Steuerung des Niveauverstellmittels (2, 6, 7, 8, 9, 10, 11) zur Angleichung eines ermittelten Ist-Fahrzeugniveaus an ein gewünschtes Soll-Fahrzeugniveau (S) geeignet ist.

Des weiteren ist zwischen dem Fahrzeugaufbau (1) und dem Achsträger (3) als Dämpfungsmittel ein einstellbarer Stoßdämpfer (18) vorgesehen. Der Stoßdämpfer (18) dient zur Dämpfung von Abstandsänderungen zwischen dem Fahrzeugaufbau (1) dem Achsträger (3). Der Stoßdämpfer (18) ist mit einem Druckmittel wie z. B. Öl gefüllt. Der Stoßdämpfer (18) weist zwei Kammern (20, 21) auf, die durch eine Trennwand (22) voneinander getrennt sind. Die Kammern (20, 21) sind über Druckleitungen (19, 20) und über ein elektrisch betätigbares Proportionalventil (23) variabel miteinander verbindbar. Über das Proportionalventil (23) kann ein Druckmittel-Ausgleichsstrom zwischen den Kammern (20) und (21) hinsichtlich der Durchflußrate durch die Teile (19, 20, 23) eingestellt werden, wodurch die Dämpfung des Stoßdämpfers (18) im Bereich von "schwacher Dämpfung" bis "starke Dämpfung" verstellbar ist. Das Proportionalventil (23) ist über eine elektrische Leitung (24) mit dem elektronischen Steuergerät (15) verbunden.

Das elektronische Steuergerät (15) ist derart programmiert, daß es in einem "normalen" Betriebsmodus der Luftfederungsanlage ein vorgegebenes Soll-Fahrzeugniveau durch Regelung der Luftmenge in dem Luftfederbalg (2) einstellt und bei Veränderungen des Ist-Fahrzeugniveaus, welche durch den Niveausensor (16) ermittelt werden, durch Ansteuerung der Ventile (7, 9) wiederum eine Regelung der Luftmenge in dem Luftfederbalg (2) durchführt, um das Ist-Fahrzeugniveau wieder an das gewünschte Soll-Fahrzeugniveau anzugleichen.

Des weiteren ist ein manuell betätigbares Eingabeelement (25) vorgesehen, das beispielsweise als Schalter ausgebildet sein kann. Das Eingabeelement (25) ist über eine elektrische Leitung (28) mit dem elektronischen Steuergerät (15) verbunden. Zur Erfassung der Umgebungsbedingungen des Fahrzeuges ist ein Umgebungssensor (26) vorgesehen, dieser kann beispielsweise als Digitalkamera oder Ultraschallsensor ausgebildet sein. Der Umgebungssensor (29) dient, in Verbindung mit geeigneten Mustererkennungs-Algorithmen in dem elektronischen Steuergerät (15), insbesondere zur Erfassung des Vorhandenseins einer Laderampe in der unmittelbaren Umgebung des Fahrzeuges. Der Umgebungssensor (26) ist über eine elektrische Leitung (29) mit dem elektronischen Steuergerät (15) verbunden. Weiterhin ist zur Erfassung von Fahrbedingungen des Fahrzeuges, insbesondere zur Erfassung der Fahrgeschwindigkeit, ein Geschwindigkeitssensor (27) vorgesehen. Als Geschwindigkeitssensor (27) kann beispielsweise ein Radsensor eines Antiblokkiersystems oder auch das Geschwindigkeitssignal eines Tachographen verwendet werden. Der Geschwindigkeitssensor (27) ist über eine elektrische Leitung (30) mit dem elektronischen Steuergerät (15) verbunden.

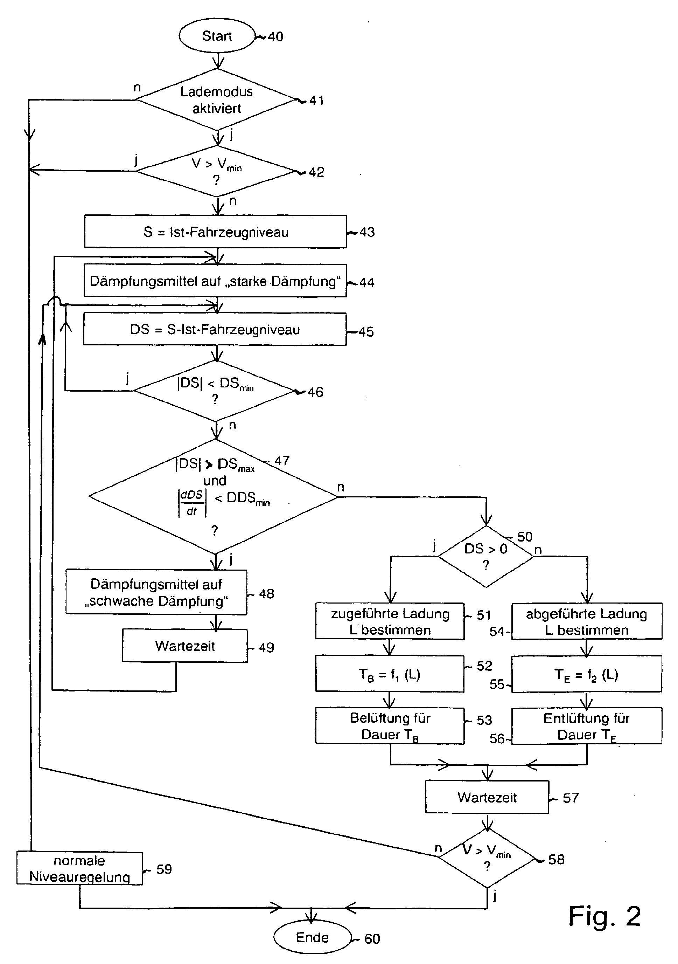

Das in der Fig. 2 dargestellte Verfahren beginnt mit einem Block (40). In einem darauffolgenden Verzweigungsblock (41) wird geprüft, ob ein besonderer Betriebsmodus der Luftfederungsanlage, genannt Lademodus, aktiviert worden ist. Der Lademodus unterscheidet sich von dem "normalen" Betriebsmodus, d.h. von einer normalen Niveauregelung, welche in der Fig. 2 durch den Block (59) symbolisiert wird, durch besondere Maßnahmen, um das Fahrzeugniveau gegenüber Änderungen während des Be- und Entladens z. B. an einer Laderampe konstant zu halten, wie nachfolgend näher erläutert wird. Eine Aktivierung des Lademodus kann beispielsweise manuell durch Betätigung des Eingabeelements (25) vorgenommen werden. Weiterhin kann eine automatische Aktivierung des Lademodus infolge einer Erkennung einer Laderampe in unmittelbarer Nähe des Fahrzeuges durch Auswertung der Signale des Umgebungssensors (26) vorgesehen sein. Sofern der Lademodus nicht aktiviert ist, wird zu dem Block (59) verzweigt, in welchem die normale Niveauregelung durchgeführt wird.

Anderenfalls wird von dem Verzweigungsblock (41) zu dem Verzweigungsblock (42) verzweigt. Dort wird geprüft, ob die Fahrzeuggeschwindigkeit (V), ermittelt durch den Geschwindigkeitssensor (27), einen Minimalwert ($V_{min}$) überschreitet, d.h. ob die Bedingung

$$V > V_{min} \qquad\qquad [1]$$

erfüllt ist. Der Minimalwert ($V_{min}$) sollte auf den Wert 0 Km/h bzw. auf den minimal von dem Geschwindigkeitssensor (27) erkennbaren Geschwindigkeitswert festgelegt werden. Eine Überschreitung dieses Minimalwerts ($V_{min}$) deutet darauf hin, daß ein Be- oder Entladevorgang des Fahrzeugs noch nicht durchgeführt werden kann, weil sich das Fahrzeug noch in einem Fahrzustand befindet, gegebenenfalls beim langsamen Heranfahren an die Laderampe. Wenn die Bedingung [1] gemäß Verzweigungsblock (42) erfüllt ist, wird ebenfalls zum Block (59) verzweigt, ansonsten ist davon auszugehen, daß das Fahrzeug sich im Stillstand befindet, und es wird dann zu dem Block (43) verzweigt.

In dem Block (43) wird der aktuelle Wert des Ist-Fahrzeugniveaus, ermittelt durch den Niveausensor (16), in einem Speicher als Soll-Fahrzeugniveau (S) gespeichert.

$$S = \text{Ist-Fahrzeugniveau} \qquad\qquad [2]$$

Sodann wird in einem Block (44) das Dämpfungsmittel (18) auf "starke Dämpfung" gestellt. Hierfür gibt das elektronische Steuergerät (15) Ansteuersignale an das Proportionalventil (23) aus, derart, daß die Durchflußrate des Drucköls durch das Proportionalventil (23) auf einen geringen Wert eingestellt wird.

In einem darauffolgenden Block (45) wird die Differenz zwischen dem Soll-Fahrzeugniveau (S) und dem derzeit vorliegenden Ist-Fahrzeugniveau bestimmt und als Sollwertdifferenz (DS) gespeichert.

$$DS = S - \text{Ist-Fahrzeugniveau} \qquad\qquad [3]$$

In einem Verzweigungsblock (46) wird sodann geprüft, ob die Sollwertdifferenz (DS) vom Betrag her kleiner ist als ein ihr zugeordneter Sollwertdifferenz-Minimalwert ($DS_{min}$), d.h. ob die Bedingung

$$|DS| < DS_{min} \qquad\qquad [4]$$

erfüllt ist. Hierdurch wird eine definierte Hysterese beim Ansprechen auf Änderungen der Niveaulage vorgesehen, d. h. ein unerwünschtes häufiges Ansprechen der Niveauregelung auf sehr kleine Änderungen der Niveaulage wird unterdrückt. Hierzu wird bei Erfüllung der in dem Verzweigungsblock (46) genannten Bedingung [4] wieder zu dem Block (45) nach Art einer Programmschleife verzweigt. Anderenfalls wird das Verfahren in dem Verzweigungsblock (47) fortgesetzt.

In dem Verzweigungsblock (47) wird geprüft, ob die Sollwertdifferenz (DS) vom Betrage her größer ist als ein ihr zugeordneter Maximalwert ($DS_{max}$) , d. h. ob die Bedingung

$$|DS| > DS_{max} \qquad\qquad [5]$$

erfüllt ist. Mit anderen Worten wird hier geprüft, ob eine vorbestimmte Mindestabweichung ($DS_{max}$) zwischen dem Ist-Fahrzeugniveau und dem in dem Soll-Fahrzeugniveau (S) vorliegt. Des weiteren wird in dem Verzweigungsblock (47) zusätzlich geprüft, ob die zeitliche Ableitung der Sollwertdifferenz (DS) vom Betrage her einen dieser Ableitung zugeordneten Minimalwert ($DDS_{min}$) unterschreitet, d.h. ob die Bedingung

$$\left| \frac{dDS}{dt} \right| < DDS_{min} \qquad\qquad [6]$$

erfüllt ist. Mit anderen Worten wird hier geprüft, ob der zeitliche Änderungsgradient des Ist-Fahrzeugniveaus unterhalb eines vorgegebenen Wertes ($DDS_{min}$) liegt. Wenn die beiden vorgenannten Bedingungen [5] und [6] erfüllt sind, wird zu einem Block (48) verzweigt, in welchem das Dämpfungsmittel (18) auf "schwache Dämpfung" verstellt wird. Sodann wird in einem Block (49) eine Wartezeit ausgeführt, bevor das Verfahren in dem Block (44) fortgesetzt wird. Durch die Verfahrensschritte in den Blöcken (47, 48, 49) soll vermieden werden, daß infolge der starken Dämpfung des Dämpfungsmittels (18) eine unerwünschte Nacheilung zwischen den von dem Steuergerät (15) ausgegebenen Luftmengenänderungen und dem Ist-Fahrzeugniveau auftritt. In diesem Fall wird mittels der Blöcke (47, 48, 49) eine schnelle Nachführung des Ist-Fahrzeugniveaus an das Soll-Fahrzeugniveau ermöglicht, so daß danach wieder mit "starker Dämpfung" ein Konstanthalten des Fahrzeugniveaus über die Verfahrensschritte in den Blöcken (50, 51, 52, 53, 54, 55, 56, 57) erfolgen kann.

Sofern keine größeren, durch die starke Dämpfung bedingten Abweichungen ($DS_{max}$) zwischen dem Ist-Fahrzeugniveau und dem Soll-Fahrzeugniveau (S) vorliegen, wird von dem Verzweigungsblock (47) zu dem Verzweigungsblock (50) verzweigt. In dem Verzweigungsblock (50) wird geprüft, ob die Variable (DS) größer als der Wert Null ist, d. h. ob die Bedingung

$$DS > 0 \qquad\qquad [7]$$

erfüllt ist. Mit anderen Worten wird hier geprüft, ob die Fahrzeug-Beladung zunimmt oder abnimmt. Wenn die Bedingung [7] gemäß Verzweigungsblock (50) erfüllt ist, also eine Beladung des Fahrzeugs durchgeführt wird, wird zu einem Block (51) verzweigt, in dem ein Maß für die zugeführte Ladung (L), d. h. die Beladungsänderung, bestimmt wird. Die Beladungsänderung kann bei Luftfederungsanlagen, bei denen der Druck im Luftfederbalg sensiert wird, anhand einer Druckänderung im Luftfederbalg ermittelt werden. Alternativ kann die Beladungsänderung durch Auswertung des zeitlichen Gradienten des Ist-Fahrzeugniveaus ermittelt werden, d. h. es erfolgt eine zeitliche Differentiation des von dem Niveausensor (16) abgegebenen Signals.

In einem darauffolgenden Block (52) wird mittels einer durch Versuche gewonnenen Tabellenfunktion $f_1$ (L) aus der Ladung (L) eine Belüftungsdauer ($T_B$) bestimmt. Sodann wird in einem Block (53) eine Belüftung des Luftfederbalgs (2) für die Belüftungsdauer ($T_B$) durchgeführt. Hierfür steuert das elektronische Steuergerät (15) das Ventil (7) in die Durchlaßstellung und das Ventil (9) in diejenige Schaltstellung, in der der Druckluftvorratsbehälter (11) mit der Druckluftleitung (8) verbunden wird.

Hiernach erfolgt wieder eine Wartezeit in dem Block (57), die dazu dient, die Luftfederungsanlage zur Ruhe kommen zu lassen und eventuelle durch die Belüftung entstandene Schwingungsvorgänge abklingen zu lassen. In einem darauffolgenden Verzweigungsblock (58) wird wiederum geprüft, ob das Fahrzeug sich noch im Stillstand befindet oder fährt. Hierfür wird in Analogie zu dem Verzweigungsblock (42) wiederum die Bedingung [1] geprüft. Bei stehendem Fahrzeug wird nach Art einer Programmschleife zu dem Block (45) verzweigt. Anderenfalls endet das Verfahren gemäß Fig. 2 mit einem Block (60).

Im Falle des Entladens des Fahrzeugs wird von dem Verzweigungsblock (50) zu dem Block (54) verzweigt. Dort wird in Analogie zu dem Block (51) die abgeführte Ladung nach den gleichen Prinzipien bestimmt. In einem darauffolgenden Block (55) wird aus einer weiteren Tabellenfunktion $f_2(L)$ aus der abgeführten Ladung (L) eine Entlüftungsdauer ($T_E$) bestimmt. In einem Block (56) erfolgt dann eine Entlüftung des Luftfederbalgs (2) für die Entlüftungsdauer ($T_E$). Für die Dauer der Entlüftung schaltet das elektronische Steuergerät (15) das Ventil (7) in seine Durchgangsstellung. Des weiteren schaltet das elektronische Steuergerät (15) das Ventil (9) in die Entlüftungsstellung, d. h. der Entlüftungsanschluß (12) ist mit der Druckluftleitung (8) verbunden.

**Patentansprüche**

1. Verfahren zum Konstanthalten eines Fahrzeugniveaus, insbesondere beim Be- und Entladen des Fahrzeuges, wobei das Fahrzeug wenigstens ein Niveauverstellmittel (2, 6, 7, 8, 9, 10, 11) mit den Verstellrichtungen "Heben" und "Senken" sowie eine Niveauregeleinrichtung (13, 14, 15, 16, 17) aufweist, die durch Steuerung des Niveauverstellmittels (2, 6, 7, 8, 9, 10, 11) zur Angleichung eines ermittelten Ist-Fahrzeugniveaus an ein gewünschtes Soll-Fahrzeugniveau (S) geeignet ist, **gekennzeichnet durch** folgende Merkmale:

   a) die Änderungen des Ist-Fahrzeugniveaus werden ermittelt und beobachtet,
   b) aus den Änderungen des Ist-Fahrzeugniveaus wird eine der beiden Beladungsänderungsrichtungen "Beladen" oder "Entladen" ermittelt,
   c) das Ist-Fahrzeugniveau wird solange nur in einer der beiden Verstellrichtungen des Niveauverstellmittels (2, 6, 7, 8, 9, 10, 11) an das gewünschte Soll-Fahrzeugniveau (S) angenähert, bis die andere Beladungsänderungsrichtung ermittelt wird oder die Fahrzeuggeschwindigkeit (V) einen Minimalwert ($V_{min}$) überschreitet.

2. Verfahren nach Anspruch 1, **dadurch gekennzeichnet, daß** bei ermittelter Beladungsänderungsrichtung "Beladen" das Niveauverstellmittel (2, 6, 7, 8, 9, 10, 11) solange nur in der Verstellrichtung "Heben" betrieben wird, bis die Beladungsänderungsrichtung "Entladen" ermittelt wird und daß bei ermittelter Beladungsänderungsrichtung "Entladen" das Niveauverstellmittel (2, 6, 7, 8, 9, 10, 11) solange nur in der Verstellrichtung "Senken" betrieben wird, bis die Beladungsänderungsrichtung "Beladen" ermittelt wird.

3. Verfahren nach Anspruch 1 oder 2, **dadurch gekennzeichnet, daß** ein Lademodus vorgesehen ist, in dem die in Anspruch 1 oder 2 angegebenen Verfahrensschritte ausführbar sind, wobei der Lademodus über ein manuell betätigbares Eingabeelement (25) auslösbar ist.

4. Verfahren nach Anspruch 1 oder 2, **dadurch gekennzeichnet, daß** ein Lademodus vorgesehen ist, in dem die in Anspruch 1 oder 2 angegebenen Verfahrensschritte ausführbar sind, wobei der Lademodus automatisch aufgrund von Umgebungsbedingungen und/oder Fahrbedingungen des Fahrzeuges auslösbar ist.

5. Verfahren nach Anspruch 4, **dadurch gekennzeichnet, daß** zu den Fahrbedingungen der Stillstand des Fahrzeuges zählt.

6. Verfahren nach Anspruch 4 oder 5, **dadurch gekennzeichnet, daß** zu den Umgebungsbedingungen das Vorhandensein einer Laderampe zählt.

7. Verfahren nach einem der Ansprüche 3 bis 6, **dadurch gekennzeichnet, daß** der Lademodus beendet wird, wenn festgestellt wird, daß sich das Fahrzeug nicht im Stillstand befindet.

8. Verfahren nach einem der Ansprüche 3 bis 7 für ein Fahrzeug, welches ein Dämpfungsmittel (18) zur Dämpfung von Niveauänderungen aufweist, das hinsichtlich seines Dämpfungsverhaltens kontinuierlich oder in Stufen im Bereich von "schwache Dämpfung" bis "starke Dämpfung" verstellbar ist, **dadurch gekennzeichnet, daß** im Lademodus das Dämpfungsmittel (18) auf "starke Dämpfung" verstellt wird.

**9.** Verfahren nach einem der Ansprüche 3 bis 8, **dadurch gekennzeichnet, daß** im Lademodus wenigstens zeitweise das Dämpfungsmittel (18) von "starke Dämpfung" in Richtung "schwache Dämpfung" verstellt wird, wenn die Überschreitung einer vorbestimmten Abweichung ($DS_{max}$) zwischen dem Ist-Fahrzeugniveau und dem Soll-Fahrzeugniveau (S) festgestellt wird.

**10.** Verfahren nach einem der Ansprüche 3 bis 9, **dadurch gekennzeichnet, daß** im Lademodus nach einer Verstellung des Niveauverstellmittels (2, 6, 7, 8, 9, 10, 11) erst nach Ablauf einer vorgegebenen Wartezeit eine weitere Verstellung des Niveauverstellmittels (2, 6, 7, 8, 9, 10, 11) durchgeführt wird.

**11.** Verfahren nach einem der vorhergehenden Ansprüche, **dadurch gekennzeichnet, daß** aus den Änderungen des Ist-Fahrzeugniveaus eine die Beladungsänderung angebende Größe (L) ermittelt wird und die Verstellung des Niveauverstellmittels (2, 6, 7, 8, 9, 10, 11) in Abhängigkeit von dieser Größe (L) durchgeführt wird.

**12.** Verfahren nach Anspruch 11, **dadurch gekennzeichnet, daß** die die Beladungsänderung angebende Größe (L) unter Verwendung einer Druckänderung im Niveauverstellmittel (2, 6, 7, 8, 9, 10, 11) ermittelt wird.

**13.** Verfahren nach Anspruch 11, **dadurch gekennzeichnet, daß** die die Beladungsänderung angebende Größe (L) unter Verwendung des zeitlichen Gradienten des Ist-Fahrzeugniveaus ermittelt wird.

**Claims**

**1.** Method of keeping the level of a vehicle constant, especially when loading and unloading the vehicle, the vehicle having at least one level-adjusting means (2, 6, 7, 8, 9, 10, 11) that has the adjusting directions "raising" and "lowering" and also having a level-regulating device (13, 14, 15, 16, 17) which, by controlling the level-adjusting means (2, 6, 7, 8, 9, 10, 11), is suitable for bringing a determined actual vehicle level into line with a desired target vehicle level (S), **characterised by** the following features:

a) the changes in the actual vehicle level are determined and observed,
b) from the changes in the actual vehicle level there is determined one of the two loading change directions "loading" or "unloading",
c) the actual vehicle level is brought closer to the desired target vehicle level (S) only in one of the two adjusting directions of the level-adjusting means (2, 6, 7, 8, 9, 10, 11) until such time that the other loading change direction is determined or the vehicle speed (V) exceeds a minimum value ($V_{min}$).

**2.** Method according to claim 1, **characterised in that** when the loading change direction "loading" is determined the level-adjusting means (2, 6, 7, 8, 9, 10, 11) is operated only in the adjusting direction "raising" until such time that the loading change direction "unloading" is determined, and **in that** when the loading change direction "unloading" is determined the level-adjusting means (2, 6, 7, 8, 9, 10, 11) is operated only in the adjusting direction "lowering" until such time that the loading change direction "loading" is determined.

**3.** Method according to claim 1 or 2, **characterised in that** a loading mode is provided wherein the method steps mentioned in claim 1 or 2 are arranged to be carried out, the loading mode being arranged to be activated by means of a manually actuatable input element (25).

**4.** Method according to claim 1 or 2, **characterised in that** a loading mode is provided wherein the method steps mentioned in claim 1 or 2 are arranged to be carried out, the loading mode being arranged to be activated automatically on the basis of circumstantial conditions and/or drive conditions of the vehicle.

**5.** Method according to claim 4, **characterised in that** the drive conditions include standstill of the vehicle.

**6.** Method according to claim 4 or 5, **characterised in that** the circumstantial conditions include the presence of a loading ramp.

**7.** Method according to one of claims 3 to 6, **characterised in that** the loading mode is terminated when it is ascertained that the vehicle is not at a standstill.

**8.** Method according to one of claims 3 to 7 for a vehicle which has a damping means (18), for damping changes in level, which in terms of its damping behaviour is adjustable continuously or in steps in the range from "weak damping" to "strong damping", **characterised in that**, in the loading mode, the damping means (18) is adjusted to "strong damping".

9. Method according to one of claims 3 to 8, **characterised in that**, in the loading mode, the damping means (18) is at least temporarily adjusted from "strong damping" in the direction of "weak damping" when it is ascertained that a predetermined difference ($DS_{max}$) between the actual vehicle level and the target vehicle level (S) is exceeded.

10. Method according to one of claims 3 to 9, **characterised in that**, in the loading mode, following an adjustment by the level-adjusting means (2, 6, 7, 8, 9, 10, 11), a further adjustment by the level-adjusting means (2, 6, 7, 8, 9, 10, 11) is carried out only after a prespecified waiting period has elapsed.

11. Method according to one of the preceding claims, **characterised in that** from the changes in the actual vehicle level there is determined a variable (L) that denotes the loading change, and the adjustment by the level-adjusting means (2, 6, 7, 8, 9, 10, 11) is carried out in dependence on that variable (L).

12. Method according to claim 11, **characterised in that** the variable (L) that denotes the loading change is determined using a pressure change in the level-adjusting means (2, 6, 7, 8, 9, 10, 11).

13. Method according to claim 11, **characterised in that** the variable (L) that denotes the loading change is determined using the gradient of the actual vehicle level against time.

**Revendications**

1. Procédé pour maintenir constante l'assiette d'un véhicule, en particulier lors du chargement et du déchargement du véhicule, dans lequel le véhicule comprend au moins un moyen de réglage d'assiette (2, 6, 7, 8, 9, 10, 11) présentant les directions de réglage "montée" et "descente" ainsi qu'un moyen de régulation d'assiette (13, 14, 15, 16, 17) qui convient, par commande du moyen de réglage de niveau (2, 6, 7, 8, 9, 10, 11) pour égaliser une assiette réelle déterminée du véhicule à une assiette de consigne souhaitée du véhicule (S), **caractérisé par** les caractéristiques suivantes :

   a) les variations de l'assiette réelle du véhicule sont déterminées et observées,
   b) à partir des variations de l'assiette réelle du véhicule on détermine l'une des deux directions de variation de chargement parmi "chargement" ou "déchargement", et
   c) l'assiette réelle du véhicule est rapprochée de l'assiette de consigne souhaitée du véhicule (S) uniquement dans l'une des deux directions de réglage du moyen de réglage d'assiette (2, 6, 7, 8, 9, 10, 11) jusqu'à ce que l'on détermine l'autre direction de variation de chargement, ou bien que la vitesse du véhicule (V) dépasse une valeur minimum (Vmin).

2. Procédé selon la revendication 1, **caractérisé en ce que** lorsqu'on détermine que la direction de variation de chargement est la direction "chargement", le moyen de réglage d'assiette (2, 6, 7, 8, 9, 10, 11) est mis en fonctionnement uniquement dans la direction de réglage "montée" aussi longtemps jusqu'à ce que l'on détermine que la direction de variation de chargement est la direction "déchargement" et, lorsqu'on a déterminé que la direction de variation de chargement est la direction "déchargement", le moyen de réglage d'assiette (2, 6, 7, 8, 9, 10, 11) est mis en fonctionnement uniquement dans la direction de réglage "descente" aussi longtemps jusqu'à ce que l'on détermine que la direction de variation de chargement est la direction "chargement".

3. Procédé selon la revendication 1 ou 2, **caractérisé en ce qu'**il est prévu un mode de chargement dans lequel les étapes de procédé indiquées dans la revendication 1 ou 2 sont exécutables, ledit mode de chargement étant déclenchable via un élément d'entrée (25) actionnable manuellement.

4. Procédé selon la revendication 1 ou 2, **caractérisé en ce qu'**il est prévu un mode de chargement dans lequel les étapes de procédé indiquées dans la revendication 1 ou 2 sont exécutables, ledit mode de chargement étant déclenchable automatiquement en se basant sur des conditions environnantes et/ou des conditions de circulation du véhicule.

5. Procédé selon la revendication 4, **caractérisé en ce que** l'arrêt du véhicule compte parmi les conditions de circulation.

6. Procédé selon la revendication 4 ou 5, **caractérisé en ce que** la présence d'une rampe de chargement compte parmi les conditions environnantes.

7. Procédé selon l'une des revendications 3 à 6, **caractérisé en ce que** le mode de chargement est terminé lorsqu'on détermine que le véhicule ne se trouve pas à l'arrêt.

8. Procédé selon l'une des revendications 3 à 7 pour un véhicule qui présente des moyens d'amortissement (18) pour amortir les variations d'assiette, qui peut être réglé quant à son comportement d'amortissement de façon continue ou par gradins dans une plage allant d'un "amortissement faible" jusqu'à un "amortissement fort", **caractérisé en ce que** les moyens d'amortissement (18) sont réglés à un amortissement fort dans le mode de chargement.

9. Procédé selon l'une des revendications 3 à 8, **caractérisé en ce que**, dans le mode de chargement, les moyens d'amortissement (18) sont déplacés au moins temporairement depuis un "amortissement fort" en direction d'un "amortissement faible" si l'on détermine que l'écart entre l'assiette réelle du véhicule et l'assiette de consigne du véhicule (S) dépasse un écart prédéterminé (DSmax).

10. Procédé selon l'une des revendications 3 à 9, **caractérisé en ce que**, dans le mode de chargement, après un réglage du moyen de réglage d'assiette (2, 6, 7, 8, 9, 10, 11), on exécute un nouveau réglage du moyen de réglage d'assiette (2, 6, 7, 8, 9, 10, 11) uniquement après écoulement d'un temps d'attente prédéterminé.

11. Procédé selon l'une des revendications précédentes, **caractérisé en ce que** l'on détermine, à partir des variations de l'assiette réelle du véhicule, une grandeur (L) qui indique les variations de chargement, et le réglage du moyen de réglage d'assiette (2, 6, 7, 8, 9, 10, 11) est exécuté en fonction de cette grandeur (L).

12. Procédé selon la revendication 11, **caractérisé en ce que** la grandeur (L) indiquant les variations de chargement est déterminée en utilisant une variation de pression dans les moyens de réglage d'assiette (2, 6, 7, 8, 9, 10, 11).

13. Procédé selon la revendication 11, **caractérisé en ce que** la grandeur (L) indiquant les variations de chargement est déterminée en utilisant le gradient temporel de l'assiette réelle du véhicule.

Fig. 1

Start ~40

Lademodus aktiviert ~41    n

V > V$_{min}$ ? ~42    j

S = Ist-Fahrzeugniveau ~43

Dämpfungsmittel auf „starke Dämpfung" ~44

DS = S-Ist-Fahrzeugniveau ~45

|DS| < DS$_{min}$ ? ~46    j

|DS| > DS$_{max}$ ~47
und
$\left|\dfrac{dDS}{dt}\right|$ < DDS$_{min}$ ?    n

DS > 0 ? ~50    j    n

Dämpfungsmittel auf „schwache Dämpfung" ~48

Wartezeit ~49

zugeführte Ladung L bestimmen ~51

abgeführte Ladung L bestimmen ~54

T$_B$ = f$_1$ (L) ~52    55~

T$_E$ = f$_2$ (L)

Belüftung für Dauer T$_B$ ~53    56~

Entlüftung für Dauer T$_E$

Wartezeit ~57

normale Niveauregelung ~59

V > V$_{min}$ ? ~58    n    j

Ende ~60

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0666190 A
- DE 19806499 A

- US 4733883 A